Europäisches Patentamt

European Patent Office

Office européen des brevets

(11) Veröffentlichungsnummer: **0 343 342 B1**

## (12) EUROPÄISCHE PATENTSCHRIFT

(45) Veröffentlichungstag der Patentschrift:
23.10.91 Patentblatt 91/43

(51) Int. Cl.⁵: **F16B 13/06, F16B 13/12**

(21) Anmeldenummer: 89105407.4

(22) Anmeldetag: 28.03.89

(54) Befestigungselement mit Spreizhülse.

(30) Priorität: 24.05.88 DE 3817512

(43) Veröffentlichungstag der Anmeldung:
29.11.89 Patentblatt 89/48

(45) Bekanntmachung des Hinweises auf die
Patenterteilung:
23.10.91 Patentblatt 91/43

(84) Benannte Vertragsstaaten:
AT BE CH DE ES FR GB IT LI NL

(56) Entgegenhaltungen:
DE-A- 3 303 602
DE-A- 3 502 607
DE-A- 3 526 784
US-A- 4 773 803

(73) Patentinhaber: fischerwerke Artur Fischer
GmbH & Co. KG
Weinhalde 14 - 18
W-7244 Waldachtal 3/Tumlingen (DE)

(72) Erfinder: Fischer, Artur, Prof.Dr.h.c.
Weinhalde 34
W-7244 Waldachtal 3/Tumlingen (DE)

EP 0 343 342 B1

**Beschreibung**

Die Erfindung betrifft ein Befestigungselement mit Spreizhülse gemäß der Gattung des Hauptanspruchs.

Aus der DE-OS 3526784 ist ein Befestigungselement mit Spreizhülse bekannt, welches zur selbstklemmenden Befestigung in Bohrlöchern geeignet ist. Das Befestigungselement besitzt einen Schaft, auf den eine Spreizhülse aufgesetzt ist, die im unbelasteten Zustand geringfügig über den Schaftdurchmesser übersteht. Die Spreizhülse läßt sich federelastisch beim Einsetzen in ein Bohrloch zusammendrücken, wobei sie sich mit der Bohrlochwand verspannt. Beim Einschlagen muß daher die durch die elastische Verspannung hervorgerufene Reibungskraft überwunden werden. Dabei kann es vorkommen, daß der sich an die Spreizhülse anschließende Schaftteil ungewollt teilweise unter die Spreizhülse schiebt, insbesondere dann, wenn die Spreizhülse geringfügig verkantet an der von diesem Schaftteil gebildeten Schulter anliegt.

Der Erfindung liegt die Aufgabe zugrunde, die als Federhülse ausgebildete Spreizhülse so auszubilden, daß sie sicher am angrenzenden Schaftteil beim Einschlagen in ein Bohrloch anliegt.

Die Lösung dieser Aufgabe wird durch die im Hauptanspruch angegebenen Merkmale erhalten. An der Spreizhülse sind nach innen abgewinkelte Laschen ausgebildet, die beim Einschlagen des Befestigungselements an einer Schulter des Schaftes sicher anliegen. Die Spreizhülse wird durch die nach innen gebogenen Laschen in diesem Bereich verjüngt, wodurch sichergestellt ist, daß auch bei unregelmäßig verlaufenden Bohrlöchern die Spreizhülse nicht über den angrenzenden Schulterbereich des Schaftes übergreift. Weiterhin haben die nach innen gebogenen Laschen den Vorteil, daß die Spreizhülse sich beim Einschlagen aufgrund der an den Laschen angreifenden Kräfte nach außen auszubuchten versucht, wodurch eine bessere Verspannung zwischen Spreizhülse und Bohrlochwandung erreicht wird. Gleichzeitig wird dadurch die Spreizhülse beim Einschlagen in das Bohrloch besser zentriert, so daß auch dadurch ein unerwünschtes Übergreifen der Spreizhülse über den Schulterbereich des Schaftes sicher vermieden wird.

Die Erfindung wird nachfolgend anhand eines in der Zeichnung dargestellten Ausführungsbeispiels näher erläutert.

Es eigen :

Figur 1    ein Befestigungselement mit Spreizhülse,

Figur 2    einen Längsschnitt durch die in Figur 1 verwendete Spreizhülse und

Figur 3    eine Seitenansicht der in Figur 1 verwendeten Spreizhülse.

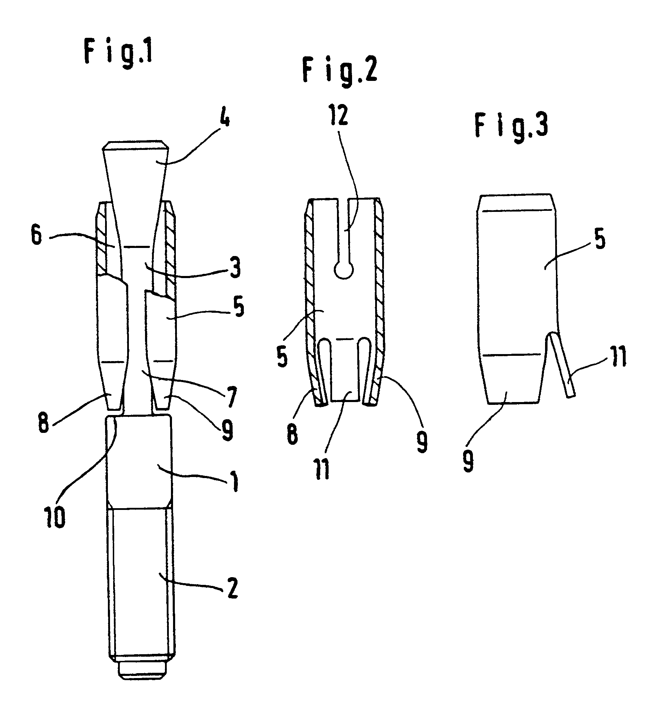

Das in Figur 1 dargestellte Befestigungselement besteht aus einem Schaft 1, der an seinem hinteren Ende einen Gewindeabschnitt 2 zum Festspannen eines Gegenstandes aufweist und im vorderen Bereich einen abgesetzten Abschnitt 3 hat, an den sich zum Ende hin ein Spreizkonus 4 anschließt. Im abgesetzten bzw. verjüngten Abschnitt 3 ist eine aus Federstahl bestehende Spreizhülse 5 aufgesetzt, die mit radialem und axialem Spiel diesen Abschnitt 3 umschließt. Zwischen Spreizhülse 5 und dem verjüngten Abschnitt 3 besteht ein Freiraum 6.

Die Spreizhülse 5 besitzt auf der in Figur 1 dargestellten Seite einen durchgehenden Längsschlitz 7, der ein federelastisches Zusammendrücken der Spreizhülse 5 zuläßt.

In Figur 2 ist der vollständige Längsschnitt der in Figur 1 dargestellten Spreizhülse 5 gezeigt. Am unteren Ende besitzt die Spreizhülse 5 zwei gegenüberliegende, nach innen gebogene Laschen 8, 9, die an einer Schulter 10 des Schaftes 1 anliegen. An der in Figur 1 nicht sichtbaren Rückseite der Spreizhülse 5 steht nach außen ein Steg 11 ab, der eine zusätzliche Rutschsicherung im Bohrloch darstellt. Mit der abstehenden Kante des Steges 11 kann dieser in die Bohrlochwand wie ein Widerhaken eingreifen, so daß die Spreizhülse 5 sicher im Bohrloch gehalten wird.

Wie in Figur 2 ersichtlich ist, besitzt die Spreizhülse 5 an ihrer Rückseite einen Schlitz 12, der ebenso wie der Längsschlitz 7 ein Aufspreizen der Spreizhülse 5 im Bereich des Spreizkonus 4 zuläßt. Das Aufspreizen der Spreizhülse 5 wird durch Einziehen des Spreizkonus 4 in die Spreizhülse 5 erreicht. Dies geschieht beispielsweise dadurch, daß auf den Gewindeabschnitt 2, der aus der Bohrlochöffnung herausragt, zunächst ein zu befestigender Gegenstand mit einer Bohrung aufgesetzt wird und dann eine Schraubenmutter aufgeschraubt und angezogen wird. Dabei wird der Spreizkonus 4 nach unten gezogen, während die Spreizhülse 5 ortsfest im Bohrloch verspannt ist. Je stärker die Schraubenmutter angezogen wird, desto weiter wird der Spreizkonus 4 nach unten in die Spreizhülse 5 gezogen, so daß eine entsprechend starke Aufspreizung der Spreizhülse 5 erreicht wird. Durch die Aufspreizung der Spreizhülse 5 wird eine sichere Befestigung des Befestigungselements im Bohrloch erreicht, welches hohen Zugbelastungen standhält.

2

EP 0 343 342 B1

## Patentansprüche

1. Befestigungselement mit Spreizhülse (5) zur selbstklemmenden Befestigung in Bohrlöchern, bestehend aus einem Schaft (1) mit einem Gewindeabschnitt (2) oder einer entsprechenden Einrichtung zur Befestigung eines Gegenstandes und mit einem am Ende angeordneten Spreizkonus (4), der in einen verjüngten Abschnitt (7) des Schaftes übergeht, an welchem eine als Federhülse ausgebildete Spreizhülse (5) angeordnet ist, die im unbelasteten Zustand einen größeren Außendurchmesser aufweist als der Schaftdurchmesser, **dadurch gekennzeichnet,** daß die Spreizhülse (5) an ihrer dem Spreizkonus abgewandten Seite nach innen unter stumpfem Winkel abgewinkelte Laschen (8, 9) hat, deren stirnseitige Ränder gegen eine Schulter (10) gerichtet sind, die den Übergang zwischen dem verjüngten Abschnitt (3) und dem Schaft (1) bildet.

2. Befestigungselement nach Anspruch 1, **dadurch gekennzeichnet,** daß zwischen den Laschen (8, 9) wenigstens ein an der Spreizhülse (5) angeformter Steg (11) nach außen absteht.

## Revendications

1. Elément de fixation comportant une douille expansible (5), destiné à être fixé par autoblocage dans des trous percés, lequel élément est constitué par une tige (1) comportant un tronçon fileté (2) ou un dispositif correspondant destiné à la fixation d'un objet, et comportant un cône (4) d'expansion disposé à une extrémité, qui se raccorde à un tronçon (7) rétréci de la tige, sur lequel est disposée la douille expansible (5) conformée en douille à effet de ressort qui, lorsqu'elle n'est pas soumise à une charge ou contrainte, présente un diamètre extérieur plus grand que le diamètre de la tige, élément caractérisé en ce que la douille expansible (5) comporte, à son extrémité située à l'opposé du cône d'expansion, des pattes (8, 9) repliées vers l'intérieur en formant un angle obtus, dont les bords frontaux sont dirigés vers un épaulement (10) qui forme la transition de raccordement entre le tronçon rétréci (3) et la tige (1).

2. Elément de fixation selon la revendication 1, caractérisé en ce que entre les pattes (8, 9), au moins une barrette (11), formée sur la douille expansible (5), fait saillie vers l'extérieur.

## Claims

1. A fixing element with an expansible sleeve (5) for self-securing fixing in bored holes, consisting of a shank (1) with a threaded portion (2) or a corresponding arrangement for fastening an article and with an expander cone (4) arranged at the end, which cone graduates into a tapered portion (7) of the shank on which there is arranged an expansible sleeve (5) in the form of a spring sleeve, which sleeve in its unstressed state has a larger outer diameter than the shank diameter, characterized in that, at its end remote from the expander cone, the expansible sleeve (5) has lugs (8, 9) bent inwards at an obtuse angle, the end face edges of which are directed towards a shoulder (10) which forms the transition between the tapered portion (3) and the shank (1).

2. A fixing element according to claim 1, characterized in that between the lugs (8, 9) there projects outwards at least one member (11) integrally formed with the expansible sleeve (5).

Fig.1

Fig.2

Fig.3